# DEMANDE DE BREVET EUROPEEN

(11) **EP 4 238 822 A1**
(43) Date de publication de la demande: **06.09.2023**
(21) Numéro de dépôt: 22305257.2
(22) Date de dépôt: 04.03.2022
(51) Int. Cl.: B60P 3/07

(54) **VEHICULE DE TRANSPORT ROUTIER OU FERROVIAIRE**

(71) Demandeur: Guegan, Erik, 16250 Perignac (FR)
(72) Inventeur: Guegan, Erik, 16250 Perignac (FR)
(74) Mandataire: Plasseraud IP

(57) **Abrégé**

La présente invention concerne un véhicule de transport routier ou ferroviaire comprenant un ou plusieurs plateaux individuels (12) pour le transport de véhicule motorisé ou non, ledit ou lesdits plateaux individuels étant solidaires dudit véhicule de transport, ledit ou au moins un desdits plateaux individuels (12) étant mobile pour assurer le chargement/déchargement d'au moins un véhicule motorisé ou non sur ledit véhicule de transport routier ou ferroviaire. Selon l'invention,
- chaque plateau individuel mobile est muni d'un dispositif de protection de manière à entraîner ce dernier lorsque le plateau mobile est déplacé, et
- chaque dispositif de protection (14) définit avec son plateau individuel correspondant un volume pour loger au moins un véhicule à transporter, chaque dispositif de protection étant configuré pour former une barrière de protection dudit au moins un véhicule contre les agressions externes durant son transport.

## Description

### Domaine technique

Le présent document concerne un véhicule de transport routier ou ferroviaire pour le transport sécurisé d'un ou plusieurs véhicules tels que des voitures de luxe ou de collection, ou encore tout autre engin motorisé ou non, tel que des tracteurs, des deux-roues, des tricycles.

### Technique antérieure

Il est connu de transporter des véhicules afin de livrer ces derniers à un point de destination. De tels véhicules peuvent être déplacés sur des véhicules de transport routier, porteurs, semi-remorques ou remorques plateaux, éventuellement surbaissées.

Cependant, on constate que les porteurs ou les remorques de ces véhicules de transport routier ne sont le plus souvent pas protégés et en conséquence, les véhicules embarqués sur lesdits porteurs ou lesdites remorques sont directement exposés aux contraintes extérieures, notamment aux aléas météorologiques ou à d'éventuels actes de malveillance, ou encore aux projections de gravillons ou de pierres susceptibles de survenir durant leur transport.

Typiquement, une voiture faisant l'objet d'un tel transport est simplement placée, voire attachée à un plateau individuel fixe du véhicule de transport routier. Un plateau coulissant qui peut être ce même plateau individuel lorsqu'il est unique, permet de charger ou décharger la voiture du véhicule de transport routier. La voiture est éventuellement sanglée sur son plateau individuel en étant laissée à l'air libre, c'est-à-dire à ciel ouvert.

Or, lorsque le véhicule de transport routier se déplace sur une route ou une autoroute, il n'est pas rare que des projections de cailloux ou d'autres projectiles se produisent, la voiture ainsi transportée pouvant dès lors être directement impactée.

De même, des conditions météorologiques extrêmes telles que de la grêle, ou une malveillance humaine, peuvent également endommager la voiture ainsi transportée.

Il peut en résulter des dommages au véhicule notamment à sa carrosserie, qui sont coûteux à réparer, en particulier pour des voitures de luxe ou de collection, et peuvent en outre nécessiter une immobilisation plus ou moins longue.

Par ailleurs, on connaît des camions de transport de marchandises avec des plateformes fixes et fermées.

A titre purement illustratif, des véhicules frigorifiques comportant soit à l'arrière de la cabine de conduite dans le cas d'un porteur, soit derrière le véhicule tracteur dans le cas d'une semi-remorque, une enceinte isotherme comprenant une ou plusieurs portes étanches pour le transport de denrées périssables telles que des produits alimentaires surgelés, sont courants.

Des véhicules utilitaires dont l'espace de chargement est délimité par un ensemble de montants et de bâches, éventuellement coulissantes, dénommé aussi "tautliner", sont également connus.

En outre, des véhicules de transport routier comprenant une carrosserie supportant un agencement de bâche délimitant un volume intérieur de chargement, et comportant une plateforme mobile pour le chargement/déchargement d'une voiture sont connus.

Toutefois, dans ce dernier cas, on observe lors du chargement/déchargement de la voiture que cette dernière a tendance à toucher le toit de l'agencement de bâche et il est donc nécessaire de faire coulisser ou de lever ce toit au préalable pour éviter d'endommager le véhicule de transport routier, et bien entendu, le véhicule lui-même. Ceci entraîne des surcoûts à la fabrication.

Des manipulations sont requises, avant et après chargement/déchargement du véhicule, ce qui représente une perte de temps significative.

Un entretien supplémentaire est également nécessaire.

Ainsi, il ressort que dans toutes les configurations connues de l'état de l'art, les véhicules transportés par des véhicules de transport routier sont insuffisamment protégés voire non protégés.

Il existe donc un besoin pressant pour un véhicule de transport routier ou ferroviaire pour le transport d'au moins un véhicule, dont la conception originale permette de surmonter les inconvénients de l'art antérieur exposés ci-dessus.

### Objet de l'invention

La présente invention vise à pallier les inconvénients de l'art antérieur en proposant un véhicule de transport routier ou ferroviaire, simple dans sa conception et dans son mode opératoire, économique, offrant une protection efficace de chaque véhicule transporté par celui-ci.

Un autre objet de la présente invention est un tel véhicule de transport routier ou ferroviaire autorisant un chargement/déchargement rapide et fiable de chaque véhicule transporté.

### Exposé de l'invention

Il est donc proposé un véhicule de transport routier ou ferroviaire comprenant un ou plusieurs plateaux individuels pour le transport de véhicule motorisé ou non, ledit ou lesdits plateaux individuels étant solidaires dudit véhicule de transport, ledit ou au moins un desdits plateaux individuels étant mobile pour assurer le chargement/déchargement d'au moins un véhicule motorisé ou non, sur/du ledit véhicule de transport routier ou ferroviaire. Selon l'invention,
- au moins chaque plateau individuel mobile est muni d'un dispositif de protection de manière à entraîner ce dernier lorsque le plateau mobile est déplacé, et
- chaque dispositif de protection définit avec son plateau individuel correspondant un volume pour loger au moins un véhicule motorisé ou non à transporter, chaque dispositif de protection étant de plus configuré pour former une barrière de protection dudit au moins un véhicule durant son transport.

La présente invention trouve des applications dans le transport de tout véhicule motorisé, tel que des voitures de collection, des voitures de luxe, des tracteurs, ... des engins motorisés à deux-roues tels que des motos ou encore des engins non motorisés mais roulant tels que des remorques, ou encore, et de manière plus générale, déplaçables ou roulant.

Bien entendu, lorsque ce véhicule de transport routier ou ferroviaire comprend des plateaux individuels fixes, chacun de ces plateaux individuels peut également comprendre un tel dispositif de protection solidaire de ce dernier pour assurer la protection de chaque véhicule transporté.

Chaque plateau individuel peut bien entendu recevoir plus qu'un véhicule à transporter en fonction des dimensions de ce dernier, par exemple lorsqu'il s'agit d'un engin deux-roues, et de l'espace de chargement défini pour le ou les recevoir.

Chaque plateau individuel mobile fait partie du véhicule de transport routier ou ferroviaire, ou encore est un élément constitutif de ce véhicule et n'est donc pas un élément distinct qui serait momentanément placé sur un tel véhicule. A titre d'exemple, le plateau individuel mobile forme tout ou partie d'un plancher du véhicule de transport routier ou ferroviaire.

Lorsqu'il s'agit d'un véhicule de transport routier, ce dernier peut de manière classique, comporter une cabine de conduite pour accueillir le conducteur et éventuellement au moins un autre passager.
Il s'agit de préférence d'un camion porte-voitures à carrosserie fixe ou déposable ou encore un camion dont le châssis aura été organisé pour recevoir un plateau mobile. Un tracteur routier avec sa semi-remorque aménagée, ou une remorque devant être attelée, y trouvent également leur place.

Puisque le dispositif de protection forme une barrière de protection dudit au moins un véhicule durant son transport, il délimite au moins un espace couvert entourant ce ou ces derniers pour protéger leur structure.

Selon un mode de réalisation de ce véhicule de transport routier ou ferroviaire, ledit plateau individuel forme avec son dispositif de protection une cellule définissant un volume de réception d'au moins un véhicule motorisé ou non, ladite cellule étant mobile en translation sur au moins un rail de guidage, ledit au moins un rail de guidage étant apte à être déplacé entre une position de repos, dans laquelle ledit au moins un rail de guidage est placé à plat ou sensiblement à plat sur le châssis du véhicule de transport routier ou ferroviaire et une position inclinée, dans laquelle ledit au moins un rail de guidage est incliné par rapport audit châssis.

Cette cellule peut être ouverte à au moins une de ses extrémités. Elle peut présenter à une de ses extrémité un cadre de porte fixe avec une ou plusieurs portes, ou un hayon, pour la fermeture de cette extrémité.

A titre purement illustratif, chaque rail de guidage est un élément de support longitudinal monté pivotant autour d'un axe horizontal, ce dernier étant relié au châssis du véhicule. Chaque rail de guidage est alors piloté par au moins un vérin tel qu'un vérin hydraulique. A titre d'exemple, chaque support inclinable est une poutre.

De préférence, ladite cellule et ledit au moins un rail de guidage sont configurés de sorte que dans la position inclinée dudit au moins un rail de guidage et dans une position déployée de ladite cellule, l'extrémité arrière de ladite cellule est en contact avec le sol.

De manière avantageuse, ledit véhicule peut comporter des rampes d'accès amovibles ou non pour permettre à au moins un véhicule motorisé ou non de monter sur ledit plateau individuel lorsque cette cellule correspondante est en contact ou à proximité du sol.

Avantageusement, ledit véhicule comporte au moins un actionneur tel qu'un vérin ou un treuil, ladite cellule étant accouplée audit au moins un actionneur de sorte que ce dernier déplace ladite cellule le long dudit au moins un rail, notamment pour remonter cette cellule depuis une position déployée dans laquelle elle est en contact avec le sol, jusqu'à une position de rangement sur le châssis dudit véhicule, ledit au moins un rail de guidage étant dans sa position de repos.

A titre d'exemple, il peut s'agir d'un vérin hydraulique.

Cette cellule peut également comporter un treuil fixé préférentiellement à l'avant de ladite cellule pour faciliter le déplacement d'un véhicule motorisé ou non à l'intérieur de celle-ci.

Selon un autre mode de réalisation de ce véhicule de transport routier ou ferroviaire, ledit au moins un rail de guidage est monté en pivotement vertical autour d'un axe sur le châssis du véhicule, et comporte à son extrémité arrière au moins un élément de renfort mécanique destiné à venir en appui sur le sol.

Chaque rail de guidage est ainsi mobile en rotation autour de cet axe pour être déplacé verticalement entre sa position de repos et sa position inclinée, dans laquelle ce rail est incliné par rapport au châssis du véhicule de transport.

A titre purement illustratif, ce véhicule de transport routier ou ferroviaire, comprenant deux rails de guidage, il comprend une traverse, ou poutre reliant les extrémités arrière de ces rails de guidage. Cette poutre comporte des jambes éventuellement pourvues à leur extrémité inférieure de pied tels que des roues, pour venir en contact avec le sol.

Ces éléments de renfort mécanique permettent de renforcer structurellement les rails pour le déplacement de la cellule vers sa position déployée.

Selon un autre mode de réalisation de ce véhicule de transport routier ou ferroviaire, le dispositif de protection comprend une bâche ou un agencement de bâche.

Par exemple, ce dispositif de protection peut comprendre un ensemble d'éléments porteurs de bâche montés directement sur ledit plateau individuel mobile.

Lesdits éléments porteurs peuvent être fixes ou ledit plateau individuel mobile peut comporter des moyens de déplacement de ces éléments porteurs de bâche, lesquels sont alors configurés pour déplacer lesdits éléments porteurs depuis une position déployée dans laquelle la bâche est déployée et installée au-dessus dudit plateau individuel jusqu'à une position dégagée.

Alternativement, ou en supplément, la bâche peut être montée coulissante de sorte à pouvoir être repliée pour occuper un encombrement minimal et dégager le plateau. Par exemple, cette bâche peut glisser sur des rails longitudinaux placés dans la partie haute de la cellule.

Selon un autre mode de réalisation de ce véhicule de transport routier ou ferroviaire, ledit plateau individuel forme avec son dispositif de protection une cellule définissant un volume de réception d'au moins un véhicule motorisé ou non, ladite cellule étant mobile entre une position chargée dans laquelle elle est solidaire du châssis dudit véhicule et une position déchargée, dans laquelle elle repose en partie ou entièrement sur un support tel que le sol, tout en étant toujours solidaire du reste dudit véhicule de transport.

De manière avantageuse, ledit véhicule de transport comprend des moyens de fixation du plateau individuel mobile avec la structure environnante dudit véhicule.

Selon encore un autre mode de réalisation de ce véhicule de transport routier ou ferroviaire, le dispositif de protection est un caisson rigide, éventuellement comprenant des ouvertures/fermetures latérales.

Alternativement, le dispositif de protection peut encore comporter dans le sens de sa longueur au moins une partie rigide et au moins une partie comprenant une bâche souple, lesquelles sont reliées entre elles pour former un ensemble continu ou monobloc.

A titre purement illustratif, ce caisson, ou cette partie rigide, peut comporter une extrémité ouverte laquelle est équipée d'un cadre de porte fixe avec une ou plusieurs portes, ou d'un hayon, pour la fermeture du caisson.

Ce caisson est monté directement sur le plateau individuel mobile.

Selon un autre mode de réalisation de ce véhicule de transport routier ou ferroviaire, il peut comprendre plusieurs plateaux individuels dont l'agencement définit une configuration à simple plan porteur ou biplan porteur.

Selon encore un autre mode de réalisation de ce véhicule de transport routier ou ferroviaire, ce dernier étant un véhicule de transport routier comportant une cabine de conduite, un desdits plateaux individuels mobiles est déplaçable entre une position basse de chargement/déchargement et une position haute de transport, laquelle peut être placée en saillie au-dessus de ladite cabine.

Ce plateau individuel placé, éventuellement, au-dessus de la cabine du véhicule de transport routier, permet avantageusement d'augmenter la capacité de chargement de ce véhicule.

Ce plateau individuel placé en saillie reçoit ainsi un véhicule motorisé ou non, lequel est alors placé le plus haut sur le véhicule de transport routier. Il constitue l'extrémité d'une rampe supérieure utilisée pour le chargement, laquelle est formée par la succession linéaire de plusieurs plateaux individuels intermédiaires.

Selon une caractéristique de l'invention, le dispositif de protection est solidaire du plateau individuel mobile, ou encore directement fixé à ce dernier. Les organes de fixation, ou d'attachement, de ce dispositif de protection sont de préférence, placés sur ce plateau individuel mobile.
A titre purement illustratif, ce dispositif de protection peut comprendre de chaque côté du plateau individuel mobile, un panneau s'étendant sur tout ou partie de la longueur de ce dernier, et en arrière sont fixées, sur des platines latérales les portes-arrières. Ces platines sont placées à l'extrémité du plateau individuel. Leurs dimensions peuvent varier en fonction du poids des portes.

Selon un mode de réalisation particulier de l'invention, pour accrocher la partie basse des fermetures des portes-arrières, une traverse mobile ayant au moins la largeur du plateau est située en extrémité arrière de ce plateau. Cette traverse supporte des éléments inférieurs de fixation des portes. Un élément de fixation centrale peut être ajouté, rigidifiant l'ensemble.

Selon encore un autre mode de réalisation de ce véhicule de transport routier ou ferroviaire, il comprend un seul plateau individuel, lequel est mobile par rapport à un châssis fixe de ce véhicule pour assurer le chargement/déchargement d'un véhicule motorisé ou non.

Selon encore un autre mode de réalisation de ce véhicule de transport routier ou ferroviaire, le volume interne de chaque dispositif de protection peut être déterminé pour loger intégralement un véhicule motorisé ou non à transporter.

Selon encore un autre mode de réalisation de ce véhicule de transport routier ou ferroviaire, il s'agit d'un fourgon, d'un poids lourd ou d'un véhicule articulé comportant au moins une partie principale porteuse de charges ou encore d'une remorque.
A titre d'exemple, il peut s'agir d'un véhicule articulé comportant au moins deux parties principales porteuses de charges, ou remorques, articulées entre elles par un attelage.

A titre purement illustratif, ce véhicule articulé comporte une partie fixe pouvant supporter un plateau mobile pour stocker un véhicule en hauteur et accueillir, ou encore recevoir, un ou plusieurs véhicules en dessous ainsi qu'une plateforme mobile pour le chargement/déchargement de ces véhicules.

Il pourrait encore s'agir d'un tracteur routier et de sa semi-remorque.

De manière plus générale, la présente invention concerne également un véhicule de transport routier ou ferroviaire comprenant un ou plusieurs plateaux individuels pour le transport de véhicule motorisé ou non, ledit ou au moins un desdits plateaux individuels étant mobile pour assurer le chargement/déchargement d'au moins un véhicule motorisé ou non, sur/du ledit véhicule de transport routier ou ferroviaire.

Selon l'invention,
- au moins chaque plateau individuel mobile est muni d'un dispositif de protection de manière à entraîner ce dernier lorsque le plateau mobile est déplacé,
- chaque dispositif de protection définit avec son plateau individuel correspondant un volume pour loger au moins un véhicule motorisé ou non à transporter, chaque dispositif de protection étant de plus configuré pour former une barrière de protection dudit au moins un véhicule durant son transport, et
- ledit plateau individuel forme avec son dispositif de protection une cellule définissant un volume de réception d'au moins un véhicule motorisé ou non, ladite cellule étant mobile entre une position chargée dans laquelle elle est solidaire du châssis dudit véhicule et une position déchargée, dans laquelle elle repose en partie ou entièrement sur un support tel que le sol.

A titre illustratif, ladite cellule peut être placée à proximité dudit véhicule en reposant sur le sol.

Le véhicule de transport peut alors comporter un bras porteur pour lever et déplacer ladite cellule.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

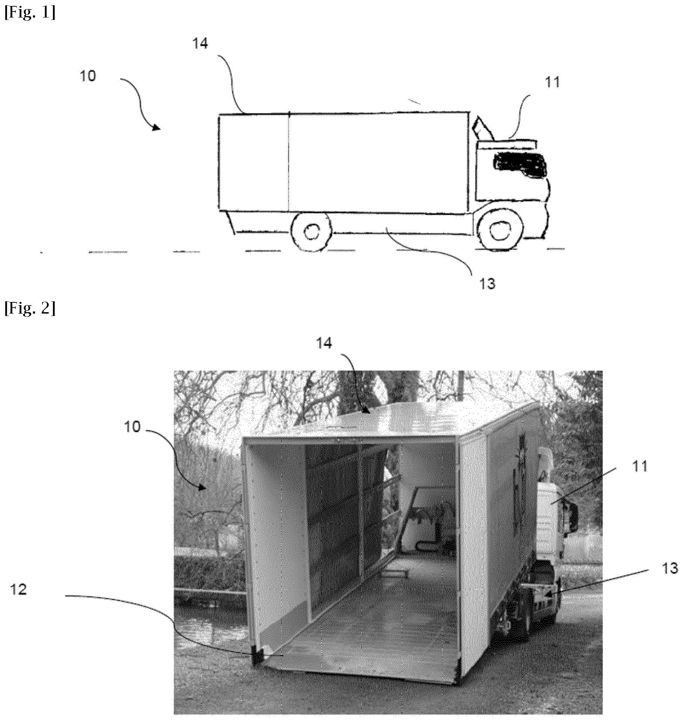

   [Fig. 1] montre un véhicule de transport routier dans un mode de réalisation particulier de la présente invention ;
**Fig. 2**
   [Fig. 2] est une vue en perspective arrière du véhicule de transport routier illustré à la Fig. 1 avec son plateau mobile en position de chargement/déchargement ;
**Fig. 3**

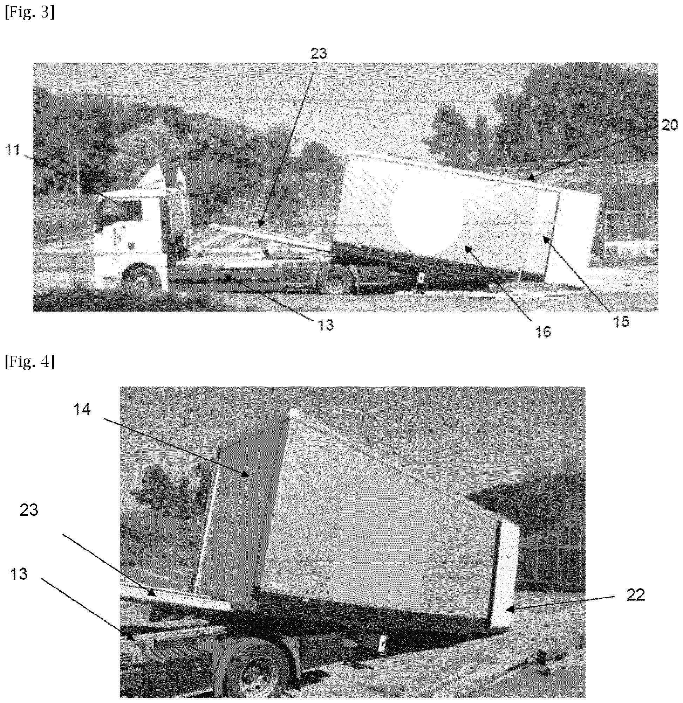

   [Fig. 3] est une vue de profil du véhicule de transport routier illustré en Fig. 2, les rails le long desquels coulisse l'ensemble formé du plateau et du dispositif de protection, étant en position relevée ;
**Fig. 4**
   [Fig. 4] est une vue partielle du véhicule de transport routier illustré en Fig. 2 montrant l'arrière de ce véhicule ;
**Fig. 5**

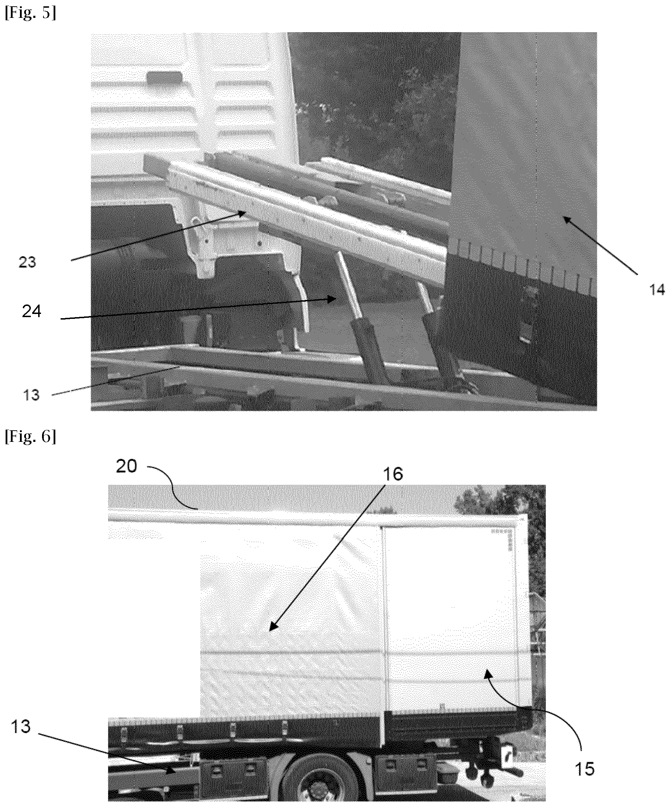

   [Fig. 5] est une autre vue élargie et partielle du véhicule de transport routier illustré en Fig. 2 montrant une portion avant de ce véhicule ;
**Fig. 6**
   [Fig. 6] est une vue partielle du véhicule de transport routier illustré en Fig. 1 montrant l'arrière de ce véhicule en position de transport ;
**Fig. 7**

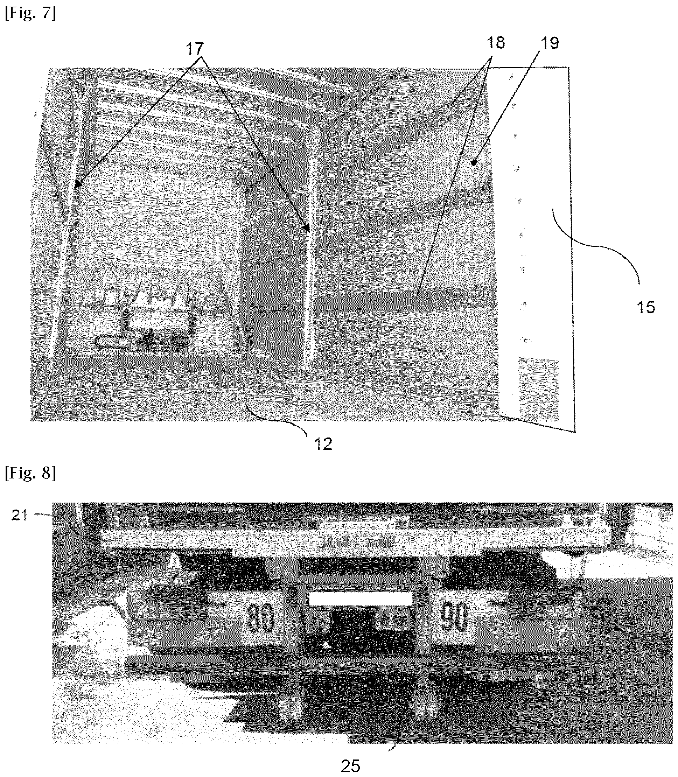

   [Fig. 7] est une vue élargie et partielle de l'espace de stockage formé par l'ensemble constitué de la plateforme et du dispositif de protection du véhicule de transport routier illustré à la Fig. 1 ;
**Fig. 8**
   [Fig. 8] montre l'arrière du véhicule de transport routier illustré à la Fig. 1 en position de transport ;
**Fig. 9**

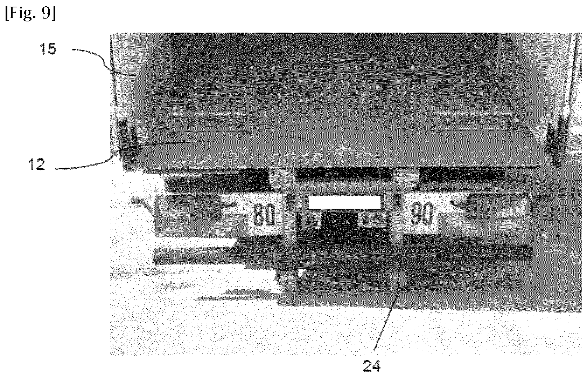

   [Fig. 9] montre l'arrière du véhicule de transport routier illustré à la Fig. 1 en position intermédiaire de chargement/déchargement d'un véhicule ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 9 illustrent de manière schématique un camion de transport routier 10 selon un mode de réalisation particulier de la présente invention.

Ce camion de transport routier 10 comprend une cabine de conduite 11 pour accueillir un conducteur.

Ce camion de transport routier 10 est du type châssis-cabine et comprend ainsi une seule plateforme individuelle 12, laquelle est mobile pour permettre le chargement/déchargement d'un véhicule motorisé sur ce véhicule de transport 10 (non représenté).

Cette plateforme mobile 12 est donc configurée pour qu'un véhicule motorisé puisse monter dessus autorisant ainsi un chargement de ce dernier sur le camion de transport routier 10.

Ce véhicule motorisé est ici une automobile mais il pourrait également s'agir d'un tracteur, un engin à deux-roues tel qu'une moto ou encore à trois roues tel qu'un triporteur ou tricycle, ou tout autre engin motorisé ou non. Dans le cas d'un véhicule non motorisé, la plateforme pourra être avantageusement équipée d'un treuil pour tirer le véhicule en vue de son chargement et pour le retenir lors de son déchargement par gravité.

La position de chargement/déchargement est qualifiée de position basse pour autoriser le chargement de ce véhicule alors que lors du transport de ce véhicule, la plateforme est en position haute et fixe sur le châssis 13 du camion.

Afin d'assurer la protection de ce véhicule motorisé lors de son transport, le camion 10 comporte un dispositif de protection 14, ici comprenant des parois montées directement sur cette plateforme mobile 12 de manière à définir une cellule fermée.

Cette cellule fermée 12, 14 est donc mobile entre les positions de chargement/déchargement et de transport.

Cette cellule 12, 14 définit un espace de chargement pour loger ce véhicule motorisé, cet espace de chargement restant avantageusement constant lors du déplacement du camion 10.

Il n'existe donc aucun risque que le véhicule ainsi transporté ne puisse toucher un élément structurel.

Dans la position de chargement ou de déchargement, une extrémité de cette cellule 12, 14 est placée en contact avec le sol.

Lorsque le véhicule à transporter présente un châssis bas, des rampes d'accès (non représentées) peuvent être déployées à partir de la plateforme mobile 12, ou sont rapportées.

La cellule 12, 14 forme avantageusement un écran permettant de protéger intégralement le véhicule motorisé ainsi transporté, notamment contre les projectiles provenant de la route, des conditions météorologiques extrêmes ou encore de tout autre type de dégradation.

Le dispositif de protection 14 est ici formé d'une première partie 16 dite souple comprenant un ensemble de structures porteuses verticales 17, telles que des poteaux coulissants, espacées les unes des autres, entre lesquelles s'étendent des barres horizontales 18 de renforcement mécanique, et de bâches 19, ainsi que d'une seconde partie 15 rigide.

Cette seconde partie 15 rigide, c'est-à-dire formée de panneaux pleins, permet de renforcer la rigidité mécanique du dispositif de protection 14 pour reprendre notamment les efforts s'exerçant sur sa structure lors de son déplacement avec la plateforme mobile 12.

La première partie 16 dite souple et la seconde partie 15 rigide supportent une toiture 20.

De préférence, l'espace de chargement défini par la cellule fermée 14 est suffisant pour permettre le passage d'un conducteur lorsqu'un véhicule est reçu sur la plateforme 12 mobile.

Toutefois, et de manière avantageuse, la première partie 16 dite souple étant placée vers l'avant du camion 10, si l'opérateur a besoin de plus d'espace, par exemple, pour ouvrir une portière du véhicule motorisé tandis que ce dernier est chargé, la bâche 19 autorise par sa souplesse ce gain d'espace sur l'extérieur de la plateforme 12.

La seconde partie 15 rigide définit une ouverture à l'extrémité arrière du camion 10. La plateforme mobile 12 comporte une traverse 21 pour supporter supporter un cadre de porte fixe, ici avec deux portes 22, pour la fermeture du dispositif de protection 14.

L'ensemble formé de la plateforme 12 mobile et du dispositif de protection 14, est monté coulissant le long de rails 23 de manière à glisser le long de ces rails 23 vers le sol dans la position de chargement/déchargement d'un véhicule motorisé. Ces rails 23 dont les extrémités avant, placées du côté de la cabine de conduite 11, sont soulevées par des actionneurs tels que des vérins 24, comprennent à leur extrémité opposée des éléments d'appui 25 destinés à venir en contact avec le sol de manière à reprendre les efforts et assurer la tenue mécanique des rails lors du déplacement de la cellule 12, 14. Chacun de ces éléments d'appui 25 comprend ici une jambe portant à son extrémité inférieure une roue. Un vérin tel qu'un vérin hydraulique (non représenté) permet de remonter l'ensemble vers sa position de transport.

Alternativement, ce dispositif de protection 14 pourrait comprendre une bâche et un ensemble de poteaux porteurs, coulissants ou non, montés sur la plateforme 12 mobile pour former une armature rigide.

Encore de manière alternative, le dispositif de protection 14 pourrait être un caisson entièrement rigide avec ou sans ouverture latérale.

En fonctionnement, la plateforme 12 mobile peut se mouvoir de sorte à venir toucher le sol pour permettre le chargement du véhicule. Ce dernier rentre alors directement dans le volume intérieur délimité par le dispositif de protection 14 et la plateforme 12 mobile. Puis, cette plateforme 12 mobile à laquelle est fixé le dispositif de protection 14 remonte sur le châssis 13 du camion 10. Le véhicule est alors prêt à être transporté vers sa destination.

L'application de l'invention n'est pas limitée aux seuls véhicules de transport routier, on pourrait également la mettre en œuvre sur du matériel roulant ferroviaire tel que des wagons de transport destinés au transport de véhicules motorisés ou non.

## Revendications

1. Véhicule de transport routier ou ferroviaire comprenant un ou plusieurs plateaux individuels (12) pour le transport de véhicule motorisé ou non, ledit ou lesdits plateaux individuels (12) étant solidaires dudit véhicule de transport (10), ledit ou au moins un desdits plateaux individuels (12) étant mobile pour assurer le chargement/déchargement d'au moins un véhicule motorisé ou non sur ledit véhicule de transport routier ou ferroviaire, **caractérisé en ce que**
- chaque plateau individuel mobile est muni d'un dispositif de protection (14) de manière à entraîner ce dernier lorsque le plateau mobile est déplacé, et
- chaque dispositif de protection (14) définit avec son plateau individuel (12) correspondant un volume pour loger au moins un véhicule à transporter, chaque dispositif de protection (14) étant configuré pour former une barrière de protection dudit au moins un véhicule contre les agressions externes durant son transport.

2. Véhicule de transport routier ou ferroviaire selon la revendication 1, **caractérisé en ce que** ledit plateau individuel (12) forme avec son dispositif de protection (14) une cellule définissant un volume de réception d'au moins un véhicule motorisé ou non, ladite cellule étant mobile en translation sur au moins un rail de guidage (23), ledit au moins un rail de guidage (23) étant apte à être déplacé entre une position de repos, dans laquelle ledit au moins un rail de guidage (23) est placé à plat ou sensiblement à plat sur le châssis (13) du véhicule de transport routier ou ferroviaire et une position inclinée, dans laquelle ledit au moins un rail de guidage (23) est incliné par rapport audit châssis (13).

3. Véhicule de transport routier ou ferroviaire selon la revendication 2, **caractérisé en ce que** ladite cellule et ledit au moins un rail de guidage (23) sont configurés de sorte que dans la position inclinée dudit au moins un rail de guidage (23) et dans une position déployée de ladite cellule, l'extrémité arrière de ladite cellule est en contact avec le sol.

4. Véhicule de transport routier ou ferroviaire selon la revendication 2 ou 3, **caractérisé en ce qu'**il comporte au moins un actionneur tel qu'un vérin ou un treuil, ladite cellule étant accouplée audit au moins un actionneur de sorte que ce dernier déplace ladite cellule le long dudit au moins un rail, notamment pour remonter cette cellule depuis une position déployée dans laquelle elle est en contact avec le sol, jusqu'à une position de rangement sur le châssis dudit véhicule, ledit au moins un rail de guidage (23) étant dans sa position de repos.

5. Véhicule de transport routier ou ferroviaire selon l'une quelconque des revendications 2 à 4, **caractérisé en ce que** ledit au moins un rail de guidage (23) est monté en pivotement vertical autour d'un axe situé sur le châssis (13) du véhicule, et **en ce qu'**il comporte à son extrémité arrière au moins un élément de renfort mécanique (25) destiné à venir en appui sur le sol.

6. Véhicule de transport routier ou ferroviaire selon l'une quelconque des revendications 1 à 5, **caractérisé en ce que** ledit dispositif de protection (14) comprend une bâche.

7. Véhicule de transport routier ou ferroviaire selon l'une quelconque des revendications 1 à 5, **caractérisé en ce que** ledit dispositif de protection (14) comprend un ensemble d'éléments porteurs (17) de bâche, montés sur ledit plateau individuel (12) mobile.

8. Véhicule de transport ou ferroviaire selon la revendication 1, **caractérisé en ce que** ledit plateau individuel forme avec son dispositif de protection une cellule définissant un volume de réception d'au moins un véhicule motorisé ou non, ladite cellule étant mobile entre une position chargée dans laquelle elle est solidaire du châssis dudit véhicule et une position déchargée, dans laquelle elle est repose en partie ou entièrement sur un support tel que le sol tout en étant toujours solidaire du reste dudit véhicule de transport.

9. Véhicule de transport ou ferroviaire selon la revendication 8, **caractérisé en ce qu'**il comprend des moyens de fixation du plateau individuel mobile avec la structure environnante dudit véhicule.

10. Véhicule de transport routier ou ferroviaire selon l'une quelconque des revendications 1 à 9, **caractérisé en ce que** le dispositif de protection (14) est un caisson rigide avec ou sans ouverture latérale.

11. Véhicule de transport routier ou ferroviaire selon l'une quelconque des revendications 1 à 9, **caractérisé en ce que** le dispositif de protection (14) comporte au moins une partie rigide (15) et au moins une partie comprenant une bâche souple (16), lesquelles sont reliées entre elles pour former un ensemble continu.

12. Véhicule de transport routier ou ferroviaire selon la revendication 10 ou 11, dans lequel ledit caisson, ou ladite partie rigide (15), comporte une extrémité ouverte laquelle est équipée d'un cadre de porte fixe avec une ou plusieurs portes, ou d'un hayon, pour la fermeture du caisson.

13. Véhicule de transport routier ou ferroviaire selon l'une quelconque des revendications 1 à 12, **caractérisé en ce qu'**il comprend plusieurs plateaux individuels (12) dont l'agencement définit une configuration à simple plan porteur ou biplan porteur.

14. Véhicule de transport routier ou ferroviaire selon l'une quelconque des revendications 1 à 13, **caractérisé en ce qu'**il comprend un seul plateau individuel (12), lequel est mobile par rapport à un châssis fixe dudit véhicule pour assurer le chargement/déchargement d'un véhicule motorisé ou non.

15. Véhicule de transport routier ou ferroviaire selon l'une quelconque des revendications 1 à 14, **caractérisé en ce qu'**il s'agit d'un fourgon, d'un poids lourd ou d'un véhicule articulé comportant au moins une partie principale porteuse de charges ou encore d'une remorque.
